# EUROPEAN PATENT SPECIFICATION

(11) **EP 0 996 818 B1**
(45) Date of publication and mention of the grant of the patent: **13.08.2003**
(21) Application number: 98934008.8
(22) Date of filing: 26.06.1998
(51) Int. Cl.: F02D 41/40, F02D 41/06

(54) **METHOD AND ARRANGEMENT FOR STARTING A FOUR-STROKE INJECTION ENGINE**
VERFAHREN UND VORRICHTUNG ZUM STARTEN EINER 4-TAKT EINSPRITZMASCHINE
PROCEDE ET DISPOSITIF DESTINES AU DEMARRAGE D'UN MOTEUR A INJECTION A QUATRE TEMPS

(30) Priority: 08.07.1997 SE 9702633
(43) Date of publication of application: 03.05.2000
(73) Proprietor: SCANIA CV AKTIEBOLAG, S-151 87 Södertälje (SE)
(72) Inventor: NEIDENSTRÖM, Bo, S-151 47 Södertälje (SE); WESTMAN, Björn, Columbus, IN 47201 (US)
(74) Representative: Waldebäck, Hans Olov
(86) International application number: SE9801252
(87) International publication number: WO99002838

(56) References cited:
- EP-A- 0 640 762
- EP-A- 0 684 376
- WO-A-94/23192
- SE-B- 467 703

## Description

### AREA OF INVENTION

The present invention relates to a method and a four-stroke combustion engine in accordance with the preamble to patent claims 1 and 3 respectively. (Compare with DE-A-4 143 054 & SE-B-46 77 03.)

### STATE OF THE ART

Multi-cylinder four-stroke diesel engines have traditionally been equipped with a fuel injection pump which is mechanically connected via a set of gearwheels to the engine's crankshaft from which the pump receives its drive. The fuel injection pump has pumped fuel at high pressure via a number of lines out to the injection orifices of each cylinder. During engine manufacture, the engine and the fuel injection pump have been synchronised so that injection can take place in the right cylinder at the right time and that a correct fuel injection sequence is thereby achieved. The development of fuel injectors has resulted in there now being types which consist of an injector with a more or less integrated pump. There are embodiments whereby the pump and the injector are fully integrated in a single unit and there are other embodiments whereby these units are not fully integrated in a single unit but each fuel injector is instead supplied by a separate pump element in the vicinity of the injection orifice. These new types of fuel injector make it possible to adjust considerably more accurately than previously the fuel injection in each cylinder. These new types of fuel injector lack, however, any mechanical coupling between the fuel injection pump and the engine's crankshaft such as has traditionally been used. This means that the synchronisation of the fuel injectors and the crankshaft, which defines the position of the pistons in the engine's cylinders, has to be determined in a different manner. These more modern engines usually incorporate a sensor on the crankshaft and a sensor on the engine s camshaft. The crankshaft sensor is used for defining the position of the pistons, but these sensors cannot unambiguously define which stroke a cylinder is in. Determining this also requires a sensor on the camshaft, which unambiguously defines which strokes the engine's respective cylinders are in. A disadvantage of camshaft sensors is that their accuracy of resolution is considerably inferior to that of the crankshaft sensor. For these reasons, engines with these fuel injection systems are provided with an electronic control system which uses the camshaft signal for determining the engine's working strokes and the crankshaft sensor for determining more accurately when the injection in each cylinder should take place.

A problem in this respect is that when the engine is being started the control system knows nothing about which positions the cylinders are in and which working strokes they are in. This makes it impossible to determine a correct injection sequence. The control system thus has to wait for signals from both the crankshaft sensor and the camshaft sensor before a correct injection sequence can be definitely established. This entails the engine having to be turned a relatively large number of times.

Adjustment of fuel injection can be achieved by electrical control of a throttle valve on the fuel line from the respective injector. The method and arrangements according to a known technique for these more modern engines thus use speed indicating signals from the engine's camshaft and signals from the engine's crankshaft for controlling the constriction or blocking of the bleed circuit so that it takes place at the intended phase position and in step with pump injector activation.

In normal operation the engine thus provides the control circuit with two speed indicating signals, of which that from the crankshaft is an incremental signal, a pulse train, but with one extra phase position indication per turn, while the camshaft signal takes the form of a pulse train with one phase position indication per camshaft turn. However, the camshaft speed corresponds to half the crankshaft speed, so its phase position indication is usable for determining the correct phase position for the four-stroke engine, i.e. when the phase position indication pertaining to the camshaft is detected it shows which phase the four-stroke engine is in, and in the case of two or more cylinders the phase position for each of the engine's cylinders is shown by means of this indication as soon as the camshaft's phase position indication is detected by a detector belonging to the control circuit.

In contrast, the crankshaft's signal in principle establishes only the piston's position in the cylinder without being able to indicate, for example, whether the cylinder is in a compression phase or an exhaust phase.

In the four-stroke injection engines for which the present invention is applicable, injection is effected by means of a pump injector which is driven by a camshaft and is connected to a fuel supply line and to a bleed circuit (return circuit) for removing surplus fuel. When injection is to be activated, the pump injector is acted upon by its associated cam while at the same time the flow through the bleed circuit is constricted by means of a throttle valve (situated in that circuit) which is provided with a signal in the constricting direction from the control circuit, with the combined result that a weighed quantity of fuel is injected into the cylinder space.

When an engine in which the conventional method is employed is being started, activation of the control circuit to deliver a constricting signal occurs only after appropriate speed indicating signals have been received from both the engine's crankshaft and its camshaft. Only thereafter can the control circuit be activated to work in step with the pump injector so that injection to the cylinder concerned can be effected in the correct phase position.

The conventional method thus means that the first injection can only take place after up to two turns of the engine, which is troublesome from the energy and time points of view and hence constitutes a substantial disadvantage.

Previously known from DE-A1-42 30 616 is an arrangement for registering the phase position for a four-stroke engine with the object of obtaining quicker starting of the engine. Under that known arrangement, however, this is achieved by the position of the shaft concerned being stored in a memory belonging to the control system so that when the engine is being started the system knows from the outset the correct phase for injection. However, this known technique is complicated and hence sensitive to malfunctions of various kinds. It also involves increased cost of the control circuit.

### OBJECTS OF THE INVENTION

The objects of the present invention are to eliminate the problems associated with the prior art and to indicate a method and an arrangement which markedly shorten starting time.

### BRIEF DESCRIPTION OF THE INVENTION

These objects are achieved according to invention by a method and an arrangement of the kind mentioned in the introduction with the features stated in patents claim 1 and 5 respectively.

The fact that only the signals from the crankshaft are used by the control circuit for effecting the constriction or blocking of the bleed circuit and that this takes place for each turn of the crankshaft (and of course in the correct position of the piston in the respective cylinder) means that constriction or blocking of the bleed circuit will take place not only in step with the pump injector being activated but also a whole turn out of phase with the latter's activation. As the pump injector is only acted upon by its cam to perform its pumping function in the correct phase position of the engine, i.e. in the correct injection phase, no fuel will be injected into the cylinder when the bleed circuit is constricted or blocked in the "wrong" stroke. The pump injector together with the constricting or blocking function may in particular be described as a logical AND unit, which means that both conditions have to be fulfilled for activity to occur, the respective conditions here being an activated pump injector and a constricted or blocked bleed circuit.

The invention achieves substantially reduced starting time for a four-stroke injection engine because the control system need not wait for the camshaft signal before setting in motion the injection and hence the engine starting process. Instead, as the control circuit only needs to wait for the crankshaft signal, the average time to first injection for starting the engine will be substantially halved. This represents a major improvement and entails great advantages with regard to energy consumption for running the starter motor as well as a marked reduction in starting time and hence quicker starting of the engines concerned.

The attached subclaims indicate advantageous embodiments of the invention. One aspect of the invention refers therein to the operating reliability of the system in the event of failure or error of the camshaft signal, since in such situations the engine can be run even when the control system only receives a (correct) signal from the engine's crankshaft. This aspect is further improved if the control system is arranged to monitor the engine's correct phase position and on that basis the control circuit either continues to operate in accordance with the phase position assumed or alters by one crankshaft turn the timing of the constriction or blocking of the bleed circuit.

### LIST OF DRAWINGS

The invention will now be explained on the basis of an embodiment with reference to the drawings, in which:
- Fig. 1: shows schematically an arrangement according to the invention in connection with a four-stroke injection engine,
- Fig.2: shows an indicating wheel for a camshaft,
- Fig.3: shows a detail of a flywheel with indicating devices,
- Fig.4: illustrates crankshaft and camshaft signals to the throttle valve, and
- Fig.5: shows schematically a block diagram of an arrangement according to the invention.

### DESCRIPTION OF AN EMBODIMENT

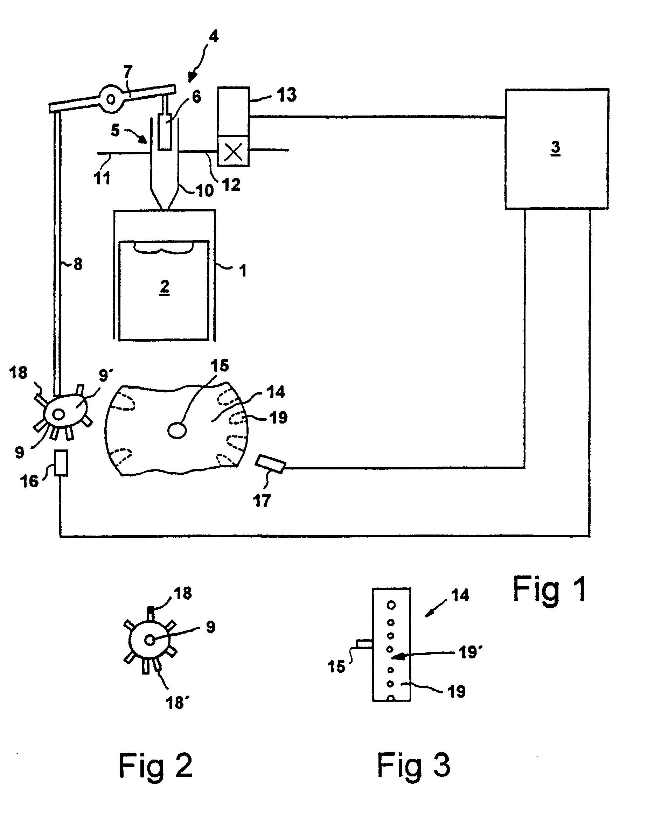

In Fig. 1 the reference 1 denotes a cylinder for a four-stroke injection engine and the reference 2 a piston movable in the cylinder. The engine may for example take the form of a multi-cylinder diesel engine intended for a heavy-duty vehicle. Injection to the cylinder is controlled by a control unit 3 which receives information from detectors 16 and 17 which detect indicating devices belonging respectively to the camshaft 9 and the crankshaft 15. An injection unit 4 arranged at the upper part of the cylinder 1 includes a pump injector 5 which itself contains a pump piston 6 movable in a pump housing 10. The pump piston 6 is acted upon by a rocker arm 7 which is itself acted upon via a pushrod 8 by a cam 9' arranged on the engine's camshaft 9. The pump housing 10 has leading to it a fuel feed line 11 and has leading from it a line belonging to a bleed circuit 12 in which a controllable throttle valve 13 is installed. Activation of the throttle valve 13 so that it constricts or blocks the bleed circuit 12 makes injection to the cylinder 1 possible at the same time as the pump piston 6 is acted upon by means of the cam 9'.

Fig.2 shows in more detail the indicating arrangement which belongs to the camshaft 9 and which exhibits indicating elements 18 distributed over its periphery, with a rotational position indicating element 18' which in practice takes the form of a double indicating element 18. Fig.3 shows a detail of a flywheel 14 arranged on a crankshaft 15, with indicating devices 19 which in this case take the form of a multiplicity of holes evenly distributed circumferentially in the shell surface of the flywheel. The reference 19' denotes a rotational position indication represented quite simply by the local omission of an indicating device 19 at one point per turn.

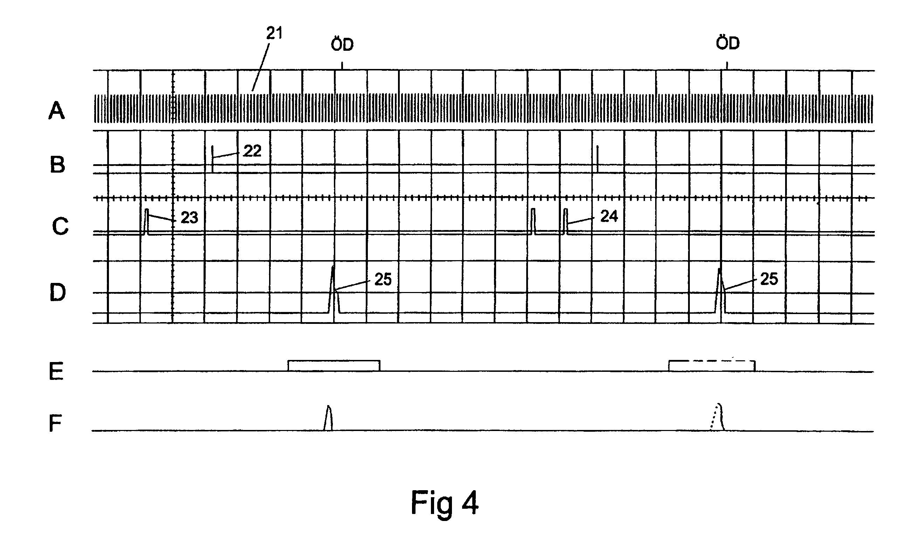

Fig.4 thus depicts a number of signals relevant to the invention as a function of the angular position of a four-stroke injection engine whereby A is a flywheel signal on which each pulse or, in the diagram, each pulse line 21 indicates a tooth of the starting sprocket, i.e. a different solution from that depicted in Fig.3. B denotes a so-called trigger signal from the flywheel generated by a tooth arranged separately from the aforesaid sprocket, meaning that the line 22 represents one pulse for each crankshaft turn.

C is the camwheel signal whereby 23 represents passing the detector of an indicating element and 24 represents passing the detector of the double indicating element. D represents activation of the injector for the respective cylinder whereby the pointed crests 25 each represent an electrical pulse delivered from the control system of the arrangement to the throttle valve to activate the latter. E denotes activation of the pump piston and F the injection actually effected.

As mentioned above, the crankshaft in a four-stroke engine rotates two turns to perform one cycle of the engine, which means that the position of the crankshaft can only be used for describing the position of the piston in the cylinder but not for definitely describing which phase (e.g. compression or exhaust) the engine is in. According to the invention, however, the trigger signal related to the crankshaft speed is used to activate the throttle valve and hence create the conditions required for injection if the pump piston is also activated.

The invention is easiest to describe on the basis of Fig.4 in which on the extreme left of the diagram the engine is turned by the starter motor being started. The occurrence of the trigger signal 22 provides an immediate indication in the control unit as to the piston position in each of the cylinders that form part of the respective four-stroke engine. As above, however, it gives no definite indication of the phase position which the engine is in. According to the invention, the throttle valve now activated soonest after the trigger signal 22 has been received is that pertaining to the cylinder which soonest after the trigger signal has been received has a piston whose position in it corresponds to the position in which injection to the cylinder should take place. At this stage an electrical pulse 25 is thus delivered to the appropriate throttle valve. Assuming that the pump piston is also activated at this stage by its associated cam (E), injection into the respective cylinder will actually be effected (F). If instead the piston had been in an exhaust phase rather than a compression phase, no injection would have taken place but it would have taken place 360° of crankshaft rotation later for that cylinder, as denoted by the broken lines further to the right against E and F.

As previously indicated, the invention is of course suitable for four-stroke injection engines with more than one cylinder irrespective of whether the number of cylinders is odd or even. In the case of an even number of cylinders whereby two cylinders always operate in counterphase, activation of the throttle valve will always take place simultaneously in the two cylinders which are furthest apart in phase, i.e. in counterphase. As may be seen from the foregoing, however, the actual injection will only take place in whichever of these two cylinders does at the same time have its pump piston acted upon by its associated cam. In the case of an odd number of cylinders, the latter do not operate in counterphase and the activation of the various throttle valves, as also the actual injection, will take place in sequence. Fig.4 also illustrates the advantages of the invention relative to the conventional technique which involves having to wait not only for the crankshaft trigger signal 22 but also for the camshaft signal 24 before the control system can begin to activate the throttle valve and hence the actual injection. An example which may be mentioned is that in a two-cylinder diesel engine the first actual injection will take place at the first pulse indication for F in an engine which includes an arrangement according to the invention, whereas with the conventional technique in the same two-cylinder four-stroke engine the first injection will take place at the pulse depicted in broken lines on the right against F, i.e. there will be a delay of a whole turn before the first injection takes place. Corresponding differences do of course arise with engines which have a different number of cylinders.

As soon as the camshaft signal is detected and the correct phase position is known, it is advantageous for the engine to change over as quickly as possible to being run with throttle valve activation in step with the pump piston action.

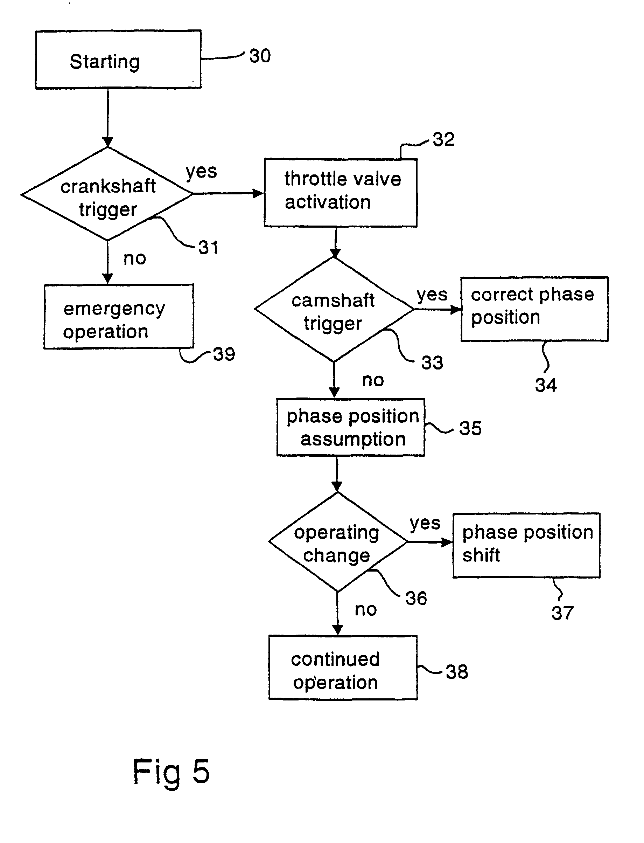

Fig.5 shows a logical block diagram of a method according to the invention whereby block 30 denotes starting of the starter motor, 31 monitoring that the crankshaft trigger signal is received, 32 the emission of an electrical pulse to the throttle valve, 33 monitoring that the camshaft trigger signal is received, 34 adaptation to correct phase position, 35 monitoring of phase position, 36 monitoring of the engine's operating parameters, 37 change of phase position setting, 38 continued operation with assumed phase position and 39 emergency operation on the basis of the camshaft signal.
In more detail, the following applies for operation in cases where the camshaft trigger signal is faulty or has simply failed completely. In such cases operation may continue as above, i.e. with activation of the throttle valve once for each crankshaft turn, but as this is undesirable, inter alia because of unnecessarily large electrical energy consumption, it is desirable to be able to change over to a form of operation whereby the throttle valve is activated in step with pump piston activation (this also applies generally for changing over to normal operation as above). This is achieved according to a further development of the invention by the control unit assuming that a certain phase position prevails in the cylinders, resulting instead in the throttle valve being activated once every second crankshaft turn. Thereafter the engine's operating parameters are monitored and if they change, e.g. through speed decrease, change in exhaust composition etc., this may be taken as indicating that the assumption was incorrect, whereupon it is corrected by the assumed phase position being shifted 360°. If the aforesaid monitoring of the engine's operating parameters detects no change, operation continues with the assumed phase position.

It may also be mentioned that the control system according to the invention may optionally include facilities for emergency operation even if the crankshaft signal fails or is faulty. In such cases emergency operation is conducted entirely on the basis of the camshaft signal.

## Claims

1. Method for starting a four-stroke injection engine of the kind which has a pump injector (5), wherein in normal operation a bleed circuit (12) connected to the pump injector is constricted or blocked in step with the pump injector being activated in order in conjunction with the latter to effect injection to the respective cylinder (1) in accordance with speed indicating signals received from the engine's camshaft (9) and crankshaft (15), **characterised in that** while the engine is being started and its phase position has not yet been verified by the camshaft signal, only the signals from the crankshaft are used for effecting constriction or blocking of the bleed circuit (12) once each turn of the crankshaft (15) for the respective cylinder, and **in that** normal control whereby the bleed circuit (12) is constricted or blocked in step with activation of the pump injector (5) once every second crankshaft turn is activated at the earliest after the engine's phase position has been verified by the camshaft signal.

2. Method according to claim 1, **characterised in that** after a predetermined period of time after starting the camshaft signal is monitored and that in the event of failure or error of that signal operation continues on the basis of the crankshaft signal.

3. Four-stroke engine (1,2) of the kind which has a pump injector (5), wherein a bleed circuit (12) connected to the pump injector via a control circuit (3) is arranged so that in normal operation it is constricted or blocked in step with pump injector activation in order in conjunction with the latter to effect injection to the respective cylinder (1) in accordance with speed indicating signals received from the engine's camshaft (9) and crankshaft (15), **characterised in that** while the engine is being started, only the signals from the crankshaft (15) are arranged to be used by the control circuit (3) for constricting or blocking the bleed circuit at each turn of the crankshaft until the engine's phase position has been verified by the camshaft signal, and **in that** normal control whereby the bleed circuit is constricted or blocked in step with pump injector activation once every second crankshaft turn is arranged to be activated at the earliest after the engine's phase position has been verified by the camshaft signal.

4. Engine according to claim 3, **characterised in that** the control system (3) is arranged so that after a predetermined period of time after starting it monitors the camshaft signal and in the event of failure or error of that signal it causes operation to continue on the basis of the crankshaft signal.

## Patentansprüche

1. Verfahren zum Anlassen eines Viertakt-Einspritzmotors der Bauart mit einer Einspritzpumpe (5), bei dem ein mit der Einspritzpumpe verbundener Entlastungskreis (12) im normalen Betrieb verengt oder gesperrt wird, während im Einklang damit die Einspritzpumpe aktiviert wird, damit in Verbindung mit dieser und in Abstimmung mit von der Nockenwelle (9) und der Kurbelwelle (15) des Motors empfangenen geschwindigkeitsanzeigenden Signalen eine Einspritzung in den betreffenden Zylinder (1) bewirkt wird, **dadurch gekennzeichnet, dass** beim Anlassen des Motors, ehe seine Phasenstellung vom Nockenwellensignal geprüft worden ist, nur die Signale von der Kurbelwelle verwendet werden, um eine Verengung oder Sperrung des Entlastungskreises (12) für den betreffenden Zylinder einmal je Umdrehung der Kurbelwelle (15) zu bewirken, und dass eine normale Steuerung, durch die der Entlastungskreis (12) einmal bei jeder zweiten Umdrehung der Kurbelwelle im Einklang mit der Aktivierung der Einspritzpumpe (5) verengt oder gesperrt wird, frühestens aktiviert wird, nachdem die Phasenstellung des Motors durch das Nockenwellensignal geprüft worden ist.

2. Verfahren nach Anspruch 1, **dadurch gekennzeichnet, dass** nach einer vorbestimmten Zeitspanne nach dem Anlassen das Nockenwellensignal überwacht wird, und dass im Falle eines Ausfalls oder Fehlers dieses Signals der Betrieb auf der Grundlage des Kurbelwellensignals fortgesetzt wird.

3. Viertaktmotor (1,2) der Bauart mit einer Einspritzpumpe (5), bei dem ein mit der Einspritzpumpe über einen Steuerkreis (3) verbundener Entlastungskreis (12) so eingerichtet ist, dass er in normalem Betrieb im Einklang mit einer Aktivierung der Einspritzpumpe verengt oder gesperrt wird, damit in Verbindung mit letzterer eine Einspritzung in den betreffenden Zylinder (1) in Abstimmung mit von der Nockenwelle (9) und der Kurbelwelle (15) des Motors empfangenen geschwindigkeitsanzeigenden Signalen eine Einspritzung in den betreffenden Zylinder (1) bewirkt wird, **dadurch gekennzeichnet, dass** beim Anlassen des Motors nur die Signale von der Kurbelwelle (15) dazu eingerichtet sind, vom Steuerkreis (3) verwendet zu werden, um den Entlastungskreis bei jeder Umdrehung der Kurbelwelle zu verengen oder zu sperren, bis die Phasenstellung des Motors vom Nockenwellensignal geprüft worden ist, und dass eine normale Steuerung, durch die der Entlastungskreis in Einklang mit einer Aktivierung der Einspritzpumpe einmal während jeder zweiten Umdrehung der Kurbelwelle verengt oder gesperrt wird, dazu eingerichtet ist, frühestens aktiviert zu werden, nachdem die Phasenstellung des Motors vom Nockenwellensignal geprüft worden ist.

4. Motor nach Anspruch 3, **dadurch gekennzeichnet, dass** die Steuerung (3) so eingerichtet ist, dass sie nach einer vorbestimmten Zeitspanne nach dem Anlassen das Nockenwellensignal überwacht und im Falle eines Ausfalls oder Fehlers dieses Signals einen fortdauernden Betrieb auf der Grundlage des Kurbelwellensignals bewirkt.

## Revendications

1. Procédé pour faire démarrer un moteur à injection à quatre temps du type à injecteur à pompe (5), dans lequel, en fonctionnement normal, un circuit d'évacuation (12) relié à l'injecteur à pompe est limité ou bloqué en cadence avec l'activation de l'injecteur à pompe, afin d'effectuer, en association avec ce dernier, une injection vers le cylindre (1) correspondant conformément aux signaux d'indication de vitesse reçus de l'arbre à cames (9) et du vilebrequin (15) du moteur, **caractérisé en ce que**, alors que le moteur démarre et que sa position de phase n'a pas été encore vérifiée par le signal de l'arbre à cames, seuls les signaux provenant du vilebrequin sont utilisés pour effectuer la limitation ou le blocage du circuit d'évacuation (12) une fois à chaque tour du vilebrequin (15) pour le cylindre correspondant, et **en ce qu'**une commande normale, par laquelle le circuit d'évacuation (12) est limité ou bloqué en cadence avec l'activation de l'injecteur à pompe (5) une fois à chaque deuxième tour du vilebrequin, est activée le plus tôt possible après que la position de phase du moteur a été vérifiée par le signal de l'arbre à cames.

2. Procédé selon la revendication 1, **caractérisé en ce que**, après une période de temps prédéterminée qui suit le démarrage, le signal de l'arbre à cames est surveillé et **en ce que**, dans le cas d'une défaillance ou d'une erreur de ce signal, le fonctionnement continue sur la base du signal du vilebrequin.

3. Moteur à quatre temps (1, 2) du type à injecteur à pompe (5), dans lequel, un circuit d'évacuation (12) relié à l'injecteur à pompe par l'intermédiaire d'un circuit de commande (3) est agencé de façon qu'il soit, en fonctionnement normal, limité ou bloqué en cadence avec l'activation de l'injecteur à pompe, afin d'effectuer, en association avec ce dernier, une injection vers le cylindre (1) correspondant conformément aux signaux d'indication de vitesse reçus de l'arbre à cames (9) et du vilebrequin (15) du moteur, **caractérisé en ce que**, alors que le moteur démarre, seuls les signaux provenant du vilebrequin (15) sont agencés pour être utilisés par le circuit de commande (3) afin de limiter ou de bloquer le circuit d'évacuation à chaque tour du vilebrequin jusqu'à ce que la position de phase du moteur ait été vérifiée par le signal de l'arbre à cames, et **en ce qu'**une commande normale, par laquelle le circuit d'évacuation est limité ou bloqué en cadence avec l'activation de l'injecteur à pompe une fois à chaque deuxième tour du vilebrequin, est agencée afin d'être activée le plus tôt possible après que la position de phase du moteur a été vérifiée par le signal de l'arbre à cames.

4. Moteur selon la revendication 3, **caractérisé en ce que** le système de commande (3) est agencé afin qu'il surveille, après une période de temps prédéterminée qui suit le démarrage, le signal de l'arbre à cames et, dans le cas d'une défaillance ou d'une erreur de ce signal, il assure la poursuite du fonctionnement sur la base du signal du vilebrequin.
